# EUROPEAN PATENT SPECIFICATION

(11) **EP 2 811 334 B1**
(45) Date of publication and mention of the grant of the patent: **18.11.2020**
(21) Application number: 13744001.2
(22) Date of filing: 29.01.2013
(51) Int. Cl.: B05C 13/02, B05C 3/18, B05C 3/09, B05D 1/18, G02B 1/14, G02C 7/02, G02B 1/10

(54) **MANUFACTURING METHOD OF EYEGLASS LENS AND LENS HOLDER**
HERSTELLUNGSVERFAHREN FÜR EINE BRILLENGLASLINSE UND EINEN LINSENHALTER
PROCÉDÉ DE FABRICATION DE VERRE À LUNETTES ET DE PORTE-VERRE

(30) Priority: 31.01.2012 JP 2012018932; 31.01.2012 JP 2012018933
(43) Date of publication of application: 10.12.2014
(73) Proprietor: HOYA Corporation, Tokyo 161-8525 (JP)
(72) Inventor: MIYAJIMA, Shinya, Tokyo 161-8525 (JP)
(74) Representative: Betten & Resch
(86) International application number: PCT/JP2013/051847
(87) International publication number: WO 2013/115159

(56) References cited:
- JP-A- 2008 116 348
- JP-A- 2011 075 690
- JP-A- 2011 081 173
- JP-A- 2011 128 311
- JP-A- 2012 177 909
- US-A- 4 716 851
- US-A1- 2011 097 484

## Description

### Technical Filed

The present invention relates to a method for manufacturing a spectacle lens having a surface treatment step of applying surface treatment to a spectacle lens in a state that the lens is dipped in a treatment liquid, and a lens holder.

### Description of Related Art

A dyeing treatment is known as one of the surface treatments applied to a spectacle lens. The dyeing treatment is a treatment of coloring a spectacle lens before edging. Mainly two systems are known as the systems of the dyeing treatment. One of them is a dip-dyeing system, and the other one is a sublimation dyeing. Each system is described hereafter.

The sublimation dyeing system is a system of dyeing a spectacle lens in a state that the lens is dipped in a dyeing liquid. In the dip-dyeing system, the spectacle lens is held vertically by a lens holder, and the spectacle lens and the lens holder are together dipped in the dyeing liquid, to thereby dye the spectacle lens. Regarding the dip-dyeing system, for example, a technique described in patent document 1 is known. Further, regarding the lens holder, for example, techniques described in patent documents 2 to 4 are known.

The sublimation dyeing system is the system of dyeing a spectacle lens by sublimating dyestuff. In the sublimation dyeing system, dyestuff made of a sublimable pigment is sublimated by heating so as to be adhered to an optical surface (convex surface or concave surface) of the spectacle lens, to thereby dye the spectacle lens. Regarding the sublimation dyeing system, for example, a technique described in patent document 5 is known.

### Prior Art Document

### Patent document

Patent document 1: Japanese Patent Laid Open Publication No.1991-72978
Patent document 2: Japanese Patent Laid Open Publication No.2011-113051
Patent document 3 : Japanese Patent Laid Open Publication No.2004-268013
Patent document 4 : Japanese Patent Laid Open Publication No.2001-311914
Patent document 5: Japanese Patent Laid Open Publication No.2001-59950

Document US 2011/0097484A1 discloses a lens holding tool including a cylindrical jig main body having an opening, a vent hole, and a hollow portion, and a ring-like lens holding body formed of an elastic body. The lens holding body includes a holding portion and a fitting portion and a fitting portion. The fitting portion is fitted on the outer surface of the jig main body. When the hollow portion is evacuated, the holding portion sucks and holds the outer peripheral edge of a lens.

Document US 4, 716, 851 discloses a curved surface shaping apparatus having a liquid tank for developing a monomolecular film on the surface of liquid contained in the liquid tank, a jig for holding a base member to be shaped, and moving means for moving the base member held by the jig with the shaped surface of the base member intersecting the liquid surface. A curved surface shaping method comprises a step of moving a base member to be shaped relative to a liquid surface on which a monomolecular film is formed with the liquid surface and the shaped surface of the base member intersecting each other.

### Summary of the Invention

### Problem to be solved by the Invention

As a request for the dyeing treatment applied to the spectacle lens, there is a case that only one surface of the spectacle lens is desired to be dyed, and there is a case that both surfaces of the spectacle lens is desired to be dyed one by one (called a "one surface dyeing" collectively hereafter). The one surface dyeing can cope with a case that two optical surfaces (convex surface and concave surface) of the spectacle lens are desired to be dyed into different colors respectively, for obtaining a lens having an excellent designability.

However, when trying to perform one surface dyeing of the spectacle lens using the abovementioned conventional technique, the following problem is involved.

First, in a case of the dip-dyeing system, both surfaces of the spectacle lens are simultaneously dyed when the spectacle lens held by the lens holder is dipped in the dyeing liquid, thus involving a problem that the dip-dyeing system cannot cope with the one surface dyeing. Further, in a case of the sublimation dyeing system, although the one surface dyeing is realized, many kinds of exclusive apparatuses are required, thus complicating the step.

An object of the present invention is to provide a technique of applying surface treatment (including dyeing treatment) to only one surface or both surfaces one by one, by a more simple method than the sublimation dyeing system.

According to the invention this object is achieved by a method according to claim 1 and a lens holder according to claim 7. The dependent claims define advantageous embodiments

### Means for solving the Problem

According to a first aspect there is provided a method for manufacturing a spectacle lens according to claim 1.

According to a further aspect, there is provided the method for manufacturing a spectacle lens of the first aspect, including:
maintaining a temperature of the treatment liquid to be higher than a normal temperature; and
increasing an adhesion of a contact portion between the lens holder and the spectacle lens by utilizing a thermal expansion of air in the sealed space, when the spectacle lens held by the lens holder is dipped in the treatment liquid.

According to a third aspect, there is provided the method for manufacturing a spectacle lens of the first or second aspect, wherein the spectacle lens is set in a floating state on a liquid face of the treatment liquid by utilizing a floating power of the air in the sealed space.

According to a fourth aspect there is provided the method for manufacturing a spectacle lens of the first or second aspects, wherein the spectacle lens is dipped in the treatment liquid together with the lens holder while holding the second optical surface of the spectacle lens in a state of facing the sealed space.

According to a fifth aspect, there is provided the method for manufacturing a spectacle lens of the fourth aspect, wherein the spectacle lens is set in a vertical state or in a state of being inclined to a horizontal surface, in the liquid of the treatment liquid.

According to a sixth aspect there is provided the method for manufacturing a spectacle lens of any one of the preceding aspects, wherein the surface treatment is a dyeing treatment, hard coat treatment, or water-repellent treatment applied to a spectacle lens, or a treatment of forming a functional film on a spectacle lens.

According to a seventh aspect, there is provided a lens holder according to claim 7.

According to an eighth aspect, there is provided the lens holder of the seventh aspect, wherein a thickness dimension of the trunk portion is set so as to be gradually larger toward the opening part.

According to a ninth aspect, there is provided the lens holder of either of the seventh and eighth aspects, wherein a stopper portion is formed on a part of the inner peripheral surface of the lens holding member so as to be abutted on an outer peripheral part of the spectacle lens.

According to a tenth aspect, there is provided the lens holder of any one of the seventh to ninth aspects, wherein the lens holding member has a hook portion capable of locking an auxiliary instrument for assisting a work of the surface treatment.

### Advantage of the Invention

According to the present invention, there is provided a technique of applying surface treatment (including dyeing treatment) to only one surface or both surfaces one by one, by a more simple method than the sublimation dyeing system.

### Brief description of the drawings

FIG. 1 is a view showing a structure of a spectacle lens treated in the present invention.
FIG. 2 is a cross-sectional view showing a structure of a lens holder according to a first embodiment of the present invention.
FIG. 3 is a view showing a state that a spectacle lens is mounted on a lens holder according to the first embodiment of the present invention.
FIG. 4 is a view showing an example of a dipping state of the spectacle lens according to the first embodiment of the present invention.
FIG. 5 is a view showing a modified example of a lens holder according the first embodiment of the present invention.
FIG. 6 is a view showing other example of a dipping state of the spectacle lens according to the first embodiment of the present invention.
FIG. 7 is a schematic view showing a structure of a lens holder according to a second embodiment of the present invention.
FIG. 8 is a view (view 1) showing a state that the spectacle lens is mounted on the lens holder according to the second embodiment of the present invention.
FIG. 9 is a view (view 2) showing a state that the spectacle lens is mounted on the lens holder according to the second embodiment of the present invention.
FIG. 10 is a schematic view showing a structure of a lens holder according to a third embodiment of the present invention.
FIG. 11 is a view showing a state that a spectacle lens is mounted on the lens holder according to the third embodiment of the present invention.
FIG. 12 is a schematic view showing a structure of a lens holder according to a fourth embodiment of the present invention.
FIG. 13 is a view showing an example of a dipping state of the spectacle lens according to the fourth embodiment of the present invention.
FIG. 14 is a schematic view showing a structure of a lens holder according to a fifth embodiment of the present invention.
FIG. 15 is a view showing lens holders not in accordance with the invention.
FIG. 16 is a view showing further lens holders not in accordance with the invention. Detailed description of the Invention

Embodiments of the present invention will be described in detail hereafter, with reference to the drawings.

In an embodiment of the present invention, dyeing treatment applied to a spectacle lens will be given as an example as a surface treatment step included in a manufacturing step of the spectacle lens. The surface treatment step described here, is the step of applying surface treatment to a spectacle lens in a state that the lens is dipped in a treatment liquid. According to the embodiment of the present invention, a spectacle lens made of plastic is assumed to be an object to be surface-treated. However, the object to be surface-treated is not limited thereto, and a spectacle lens made of glass may also be used.

In this embodiment, explanation is given in the following order.
1. Structure of a spectacle lens
2. First embodiment (structure of a lens holder, mounting of a spectacle lens, dyeing treatment step, effect, and application example)
3. Second embodiment (structure of a lens holder, mounting of a spectacle lens, dyeing treatment step, and effect)
4. Third embodiment (structure of a lens holder, mounting of a spectacle lens, and effect)
5. Fourth embodiment (structure of a lens holder, dyeing treatment step, and effect)
6. Fifth embodiment (structure of a lens holder, dyeing treatment step, and effect)
7. Modified example, etc.

### <1. Structure of a spectacle lens>

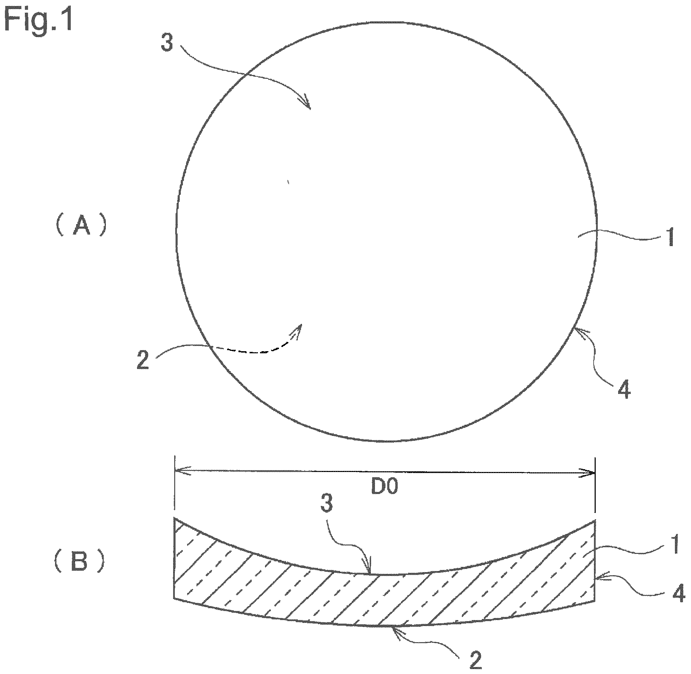

FIG. 1 is a view showing a structure of a spectacle lens treated in the present invention, wherein (A) is a front view and (B) is a lateral sectional view respectively.

A spectacle lens 1 shown in the figure is a lens base material (finish lens or a semi-finish lens) obtained by a plastic molding. The spectacle lens 1 is a lens before edging. The finish lens is a lens with both surfaces of the lens finished into desired optical surfaces by plastic molding. Further, the semi-finish lens is a lens with one of the optical surfaces finished and the other optical surface unfinished.

An outer shape of the spectacle lens 1 is formed into a circular shape in a dimension of outer diameter D0. Two optical surfaces 2 and 3 are formed on the spectacle lens 1 in a front-rear relation. A convex surface is formed on one optical surface 2, and a concave surface is formed on the other optical surface 3. Further, an edge surface 4 is formed on the spectacle lens 1. The edge surface 4 constitutes an outer peripheral surface (end face) of the spectacle lens 1.

### <2. First embodiment>

### (2-1. Structure of a lens holder)

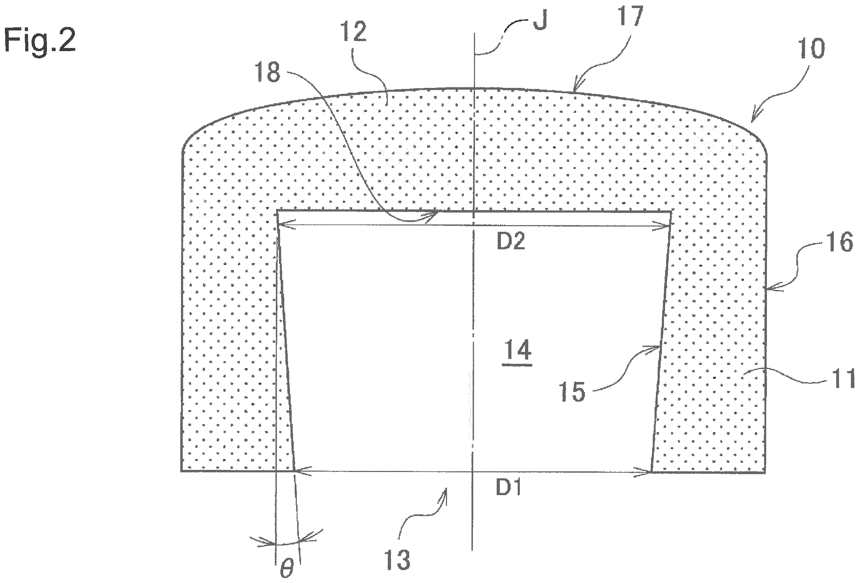

FIG. 2 is a cross-sectional view showing a structure of a lens holder according to a first embodiment of the present invention.

The lens holder is formed using a lens holding member 10 which is formed into a cup shape as a whole. The lens holder 10 has a trunk portion 11 and a head portion 12 integrally. Further, the lens holding member 10 has an opening part 13 on an opposite side of the head portion 12. A hollow part 14 is formed inside of the lens holding member 10. The lens holding member 10 is formed using an elastic material having rubber elasticity. As the elastic material constituting the lens holding member 10, for example, silicone rubber, fluorine rubber, and nitrile rubber, etc., can be used.

The trunk portion 11 is formed into a cylindrical shape. The opening part 13 and the hollow part 14 are formed in the trunk portion 11. An inner peripheral surface 15 of the trunk portion 11 is preferably formed in a state inclined in a taper shape as shown in the figure. An inclination angle θ of the inner peripheral surface 15 is set beyond 0 degree, or beyond 0 degree but in a range of 10 degrees or less, with an axis parallel to a central axis J of the lens holding member 10 as a reference. An inclination angle θ of the inner peripheral surface 15 is preferably set to beyond 0 degree or beyond 0 degree but in a range of 5 degrees or less.
This is because if the inclination angle θ is beyond 5 degrees, a contact area of the inner peripheral surface 15 and the edge surface 4 is reduced.

The inner peripheral surface 15 of the trunk portion 11 is formed so that the inner diameter becomes gradually smaller toward the opening part 13 from the head portion 12. More specifically, a minimum inner diameter (opening diameter of the opening part 13) D1 of the inner peripheral surface 15 is set to be smaller than the outer diameter D0 of the spectacle lens 1. Further, a maximum inner diameter D2 of the inner peripheral surface 15 is set to be larger than the outer diameter D0 of the spectacle lens 1. Then, the inner diameter of the inner peripheral surface 15 at a position slightly entered into the hollow part 14 from the opening part 13, is set to a dimension almost equal to the outer diameter D0 of the spectacle lens 1.

The outer peripheral surface 16 of the trunk portion 11 is formed in parallel to the central axis J of the lens holding member 10. A thickness dimension of the trunk portion 11 is determined by a difference of dimensions between a radius of the inner peripheral surface 15 of the trunk portion 11 and a radius of the outer peripheral surface 16. Therefore, the thickness dimension of the trunk portion 11 is set to be gradually larger toward the opening part 13 from the head portion 12, in accordance with a taper of the inner peripheral surface 15.

The head portion 12 is formed so as to close one of the central axis directions of the trunk portion 11. An outside surface 17 of the head portion 12 is formed in a state of bulging in approximately an arc shape. An inside surface 18 of the head portion 12 is formed in a state perpendicular to the central axis J of the lens holding member 10. The hollow part 14 of the lens holding member 10 is partitioned by the inside surface 18 of the head portion 12 together with the inner peripheral surface 15 of the trunk portion 11.

### (2-2. Mounting of a spectacle lens)

A procedure of mounting the spectacle lens 1 on the lens holder having the abovementioned structure will be described next.

First, the opening part 13 of the trunk portion 11 is deformed so as to open to outside (in a direction in which an opening diameter is larger). Since the lens holding member 10 has rubber elasticity, for example the opening part 13 is deformed to be expanded by adding a tensile force to outside by grasping an end of the opening part 13 by finger tips or instruments, etc.

Next, the spectacle lens 1 is inserted into the hollow part 14 while maintaining a deformation state of the opening part 13. At this time, a posture of the spectacle lens 1 is preferably adjusted so that the spectacle lens 1 is disposed concentrically with the lens holding member 10.

Next, the force added on the opening part 13 of the trunk portion 11 is canceled. Then, the inner peripheral surface 15 of the trunk portion 11 is brought into contact with the edge surface 4 of the spectacle lens 1. Also, the opening part 13 of the trunk portion 11 is set in a close state by the spectacle lens 1. At this time, a contact pressure is added between the inner peripheral surface 15 of the trunk portion 11 and the edge surface 4 of the spectacle lens 1, which is caused by canceling the elastic deformation of the opening part 13. Therefore, the edge surface 4 of the spectacle lens 1 is in an adhesion state to the inner peripheral surface 15 of the trunk portion 11.

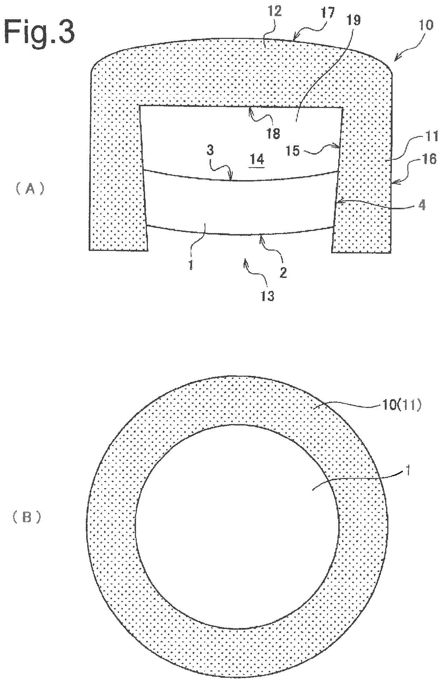

As shown in FIG. 3A and FIG. 3B, the spectacle lens 1 is mounted on the lens holding member 10 by the abovementioned procedure. In this state, a sealed space 19 is formed in the hollow part 14 of the lens holding member 10, with the spectacle lens 1 as a lid member. Specifically, the sealed space 19 is the space surrounded by three surfaces of the inside surface 18 of the head portion 12, the optical surface 3 of the spectacle lens 1, and the inner peripheral surface 15 of the trunk portion 11.

### (2-3. Dyeing treatment step)

Next, the dyeing treatment step of the spectacle lens 1 using the lens holder will be described.

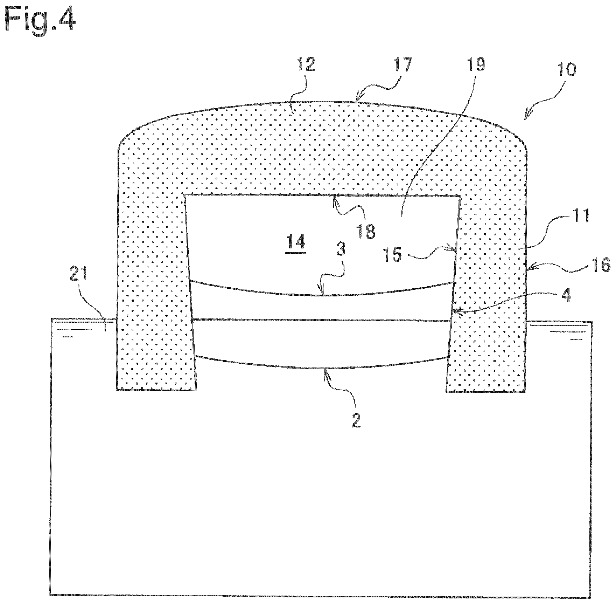

First, after the spectacle lens 1 is mounted on the lens holding member 10 by the abovementioned procedure, as shown in FIG. 4, the spectacle lens 1 is dipped in a dyeing liquid 21. At this time, one of the optical surfaces 2 and 3 of the spectacle lens 1, namely the optical surface 2 is dipped in the dying liquid 21, and the other optical surface 3 is not dipped in the dying liquid 21, and in this state, the spectacle lens 1 is held. Thus, only the optical surface 2 is dyed without dyeing the optical surface 3 of the spectacle lens 1.

Here, a temperature of the dyeing liquid 21 used for dyeing the spectacle lens 1, is maintained to be a higher temperature than a normal temperature (20°C ± 15°c) defined by JIS. Specifically, the temperature of the dyeing liquid 21 is set within a range of 70°C to 98°C. Meanwhile, a work for mounting the spectacle lens 1 on the lens holding member 10 is performed in an environment of the normal temperature. Therefore, if the spectacle lens 1 held by the lens holding member 10 is dipped in the dyeing liquid 21, the air that exists in the sealed space 19 is wormed through the spectacle lens 1 and the lens holding member 10. As a result, the air in the sealed space 19 is thermally expanded.

In this case, the spectacle lens 1 is pressed to the side of the opening part 13 by the air compressed by the thermal expansion, and the edge surface 4 of the spectacle lens 1 is pressed against the inner peripheral surface 15 by an action of the pressing force. Therefore, an adhesion force between the inner peripheral surface 15 of the trunk portion 11 and the edge surface 4 of the spectacle lens 1 is high, compared with a case before the spectacle lens 1 is dipped in the dyeing liquid 21, and simultaneously the air-tightness of the sealed space 19 becomes also high.

Further, the sealed space 19 is formed inside of the lens holding member 10 in a state that the spectacle lens 1 is mounted on the lens holding member 10. Therefore, when the spectacle lens 1 is dipped in the dyeing liquid 21, with its optical surface 2 directed downward, a floating power works on the spectacle lens 1 and the lens holding member 10 due to the existence of the air in the sealed space 19. Therefore, although the spectacle lens 1 by itself is dipped in the dyeing liquid 21, the spectacle lens 1 is maintained in a floating state on the liquid face of the dyeing liquid 21 when holding the spectacle lens 1 by the lens holding member 10.

Thereafter, when the time elapsed from dipping the optical surface 2 of the spectacle lens 1 in the dyeing liquid 21 as described above, reaches a previously set dyeing time, the spectacle lens 1 is taken out from the dyeing liquid 21 together with the lens holding member 10. The dyeing time is the time set according to a material of the spectacle lens 1 and a desired dyeing concentration. After the spectacle lens 1 is taken out from the dyeing liquid 21, the opening part 13 of the trunk portion 11 is deformed to open to outside, and the spectacle lens 1 is taken out from the lens holding member 10.

Through the above-mentioned dyeing treatment step, one surface of the spectacle lens 1 is dyed.

### (2-4. Effect)

According to the first embodiment of the present invention, the following effect can be obtained.

Namely, in applying the dyeing treatment to the spectacle lens 1, one optical surface 2 is dipped in the dyeing liquid 21, and the other optical surface 3 is not dipped in the dyeing liquid 21, and in this state, the spectacle lens 1 is held. Thus, one surface dyeing of the spectacle lens can be realized by a more simple method than the sublimation dyeing system.

Further, when the spectacle lens 1 held by the lens holding member 10 is dipped in the dyeing liquid 21, the adhesion force between the inner peripheral surface 15 of the trunk portion 11 and the edge surface 4 of the spectacle lens 1 can be increased by utilizing the thermal expansion of the air in the sealed space 19. Therefore, the dyeing liquid 21 hardly enters into a contact interface between the inner peripheral surface 15 of the trunk portion 11 and the edge surface 4 of the spectacle lens 1. Accordingly, the dyeing liquid 21 is prevented from adhering to a portion other than a dyeing object of the spectacle lens 1.

Further, in the dyeing treatment, the spectacle lens 1 can be maintained in a floating state on the liquid face of the dyeing liquid 21 by utilizing the floating power of the air in the sealed space 19. Therefore, inversion of the lens holding member 10 can be suppressed by an air bladder effect by the sealed space 19, during dip of the spectacle lens 1. In addition, the work of taking out the spectacle lens 1 from the dyeing liquid 21 can be easily performed at the end of the dipping. Also, air ventilation work for avoiding an uneven dyeing which is caused by bubble trap, can be easily performed. More specifically, the bubble trap occurs by air bubbles generated in the dyeing liquid 21 are accumulated in a portion where the inner peripheral surface 15 of the lens holding member 10 and a peripheral edge portion of the optical surface 2 of the spectacle lens 1 are crossed each other. Also, the bubble trap occurs by accumulation of the air bubbles generated in the dyeing liquid 21 in a central portion of the optical surface 3, when the spectacle lens 1 is held by the lend holding member 10 in a direction of reversed front and rear sides from FIG. 4, and the optical surface (concave surface) 3 is dipped in the dyeing liquid 21. If such a bubble trap is left as it is, uneven dyeing occurs, and therefore air ventilation work is required for discharging the air bubbles. In this embodiment, the spectacle lens 1 is set in a floating state on the liquid face of the dyeing liquid 21, and therefore the air ventilation work can be easily performed.

Further, when the optical surface 3 of the spectacle lens 1 is dipped in the dyeing liquid 21, the bubble trap can be formed at a point close to the outer peripheral edge (a part where no problem occurs in terms of the quality of the spectacle lens 1), by supporting the lens holding material 10 so that the central axis of the spectacle lens 1 is set in a direction diagonal to the liquid face of the dyeing liquid 21.

Further, although not shown, if a slit such as a hole, etc., for air drainage is provided in the trunk portion 11 of the lens holding member 10, bubble is allowed to escape to outside of the lens holding member 10 only by slightly inclining the lens holding member 10, with the spectacle lens 1 dipped in the dyeing liquid 21. In this case, a position where the slit and the hole for air drainage is preferably set so that a part of the slit and the hole, etc., is overlapped on the edge surface 4 of the spectacle lens 1 in contact with the inner peripheral surface 15 of the trunk portion 11 on the opening part 13 side of the lens holding member 10 in FIG. 3A.

Further, the thickness dimension of the trunk portion 11 becomes larger toward the opening part 13, in terms of the structure of the lens holding member 10. Therefore, when the spectacle lens 1 held by the lens holding member 10 is dipped in the dyeing liquid 21, the air in the sealed space 19 is thermally expanded by receiving the heat transmitted from the dyeing liquid 21, thus generating a difference between an inner pressure and an outer pressure, and by utilizing this difference, an adhesion force between the inner peripheral surface 15 of the trunk portion 11 and the edge surface 4 of the spectacle lens 1, and air-tightness of the sealed space 19 can be increased. Further, when the air in the sealed space 19 is thermally expanded by receiving the heat transmitted from the dyeing liquid 21, a thin portion of the trunk portion 11 is relatively easily deformed, due to pressure rise in the sealed space 19, and a thick portion of the trunk portion 11 is relatively hardly deformed. Accordingly, excessive pressure rise in the sealed space 19 can be suppressed by the deformation of the thin portion of the trunk portion 11. Further, when the air in the sealed space 19 is thermally expanded, the deformation of the thick portion of the trunk portion 11 is suppressed, and therefore the spectacle lens 1 can be surely fixed in the hollow part 14 of the lens holding member 10.

Further, as shown in FIG. 3(A), when the spectacle lens 1 is mounted on the lens holding member 10, one optical surface 2 of the two optical surfaces 2 and 3 of the spectacle lens is exposed to outside, and the other optical surface 3 is held in a state of facing the sealed space 19. Therefore, when a certain treatment is applied to one optical surface 2 of the spectacle lens 1, the other optical surface 3 can be surely protected from outside.

For example, when a foggy mist of liquid is sprayed to one optical surface 2 of the spectacle lens 1, the optical surface 3 can be protected so that particles of the liquid are not entered into the optical surface 3 and are not adhered thereto. Further, when a vapor deposition material is adhered to one optical surface 2 of the spectacle lens 1 to form a thin film, the optical surface 3 can be protected so that the vapor deposition material is not entered into the other optical surface 3 and is not adhered thereto. Further, when plasma treatment is applied to one optical surface 2, the optical surface 3 can be protected from a damage, etc., caused by the plasma treatment.

### (2-5. Application example)

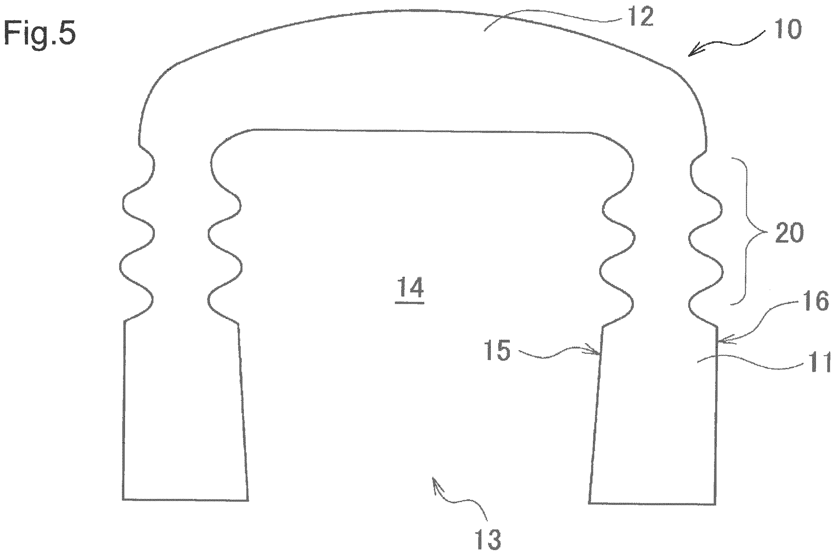

As the means for suppressing the excessive pressure rise in the sealed space 19, for example as shown in FIG. 5, the trunk portion 11 may be easily deformable (volume of the sealed space 19 may be easily varied) by forming an easy deformation part 20 in a part of the trunk portion 11 connected to a head portion 12, which is more easily deformed than other portion. The easy deformation part 20 has a structure that a thin portion and a thick portion are alternately formed in a part of the trunk portion 11.

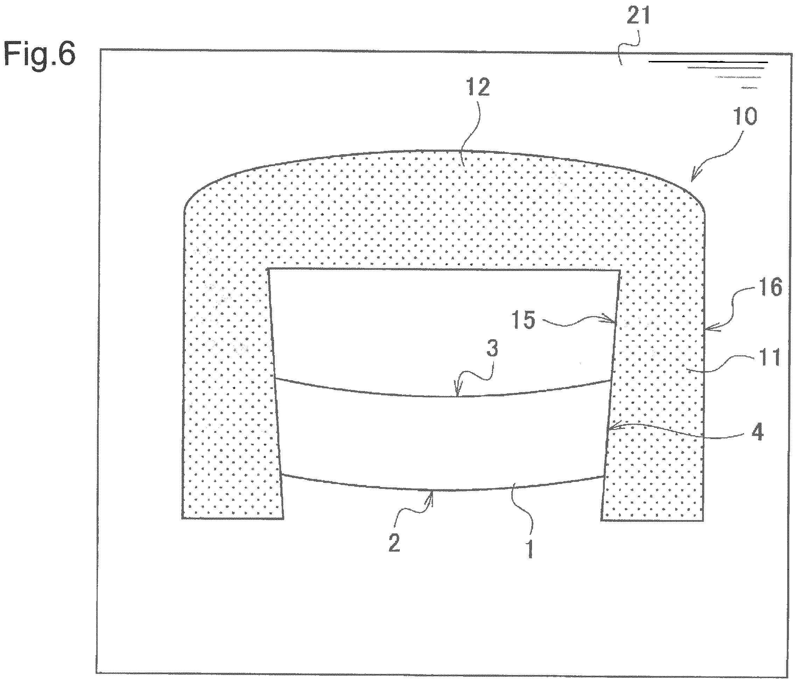

Further, in the abovementioned embodiment, the spectacle lens 1 is floated on the liquid face of the dyeing liquid 21 by the floating power of the air in the sealed space 19. However, the present invention is not limited thereto, and for example as shown in FIG. 6, the spectacle lens 1 held by the lens holding member 10 may be sunk in the liquid of the dyeing liquid 21 together with the lens holding member 10. Specifically, for example, the spectacle lens 1 held by the lens holding member 10 is set in a rack not shown, together with the lens holding member 10. Then, a specific number of spectacle lens 1 and lens holding member 10, is sunk in the liquid of the dyeing liquid 21 together with the rack.

Thus, even when the spectacle lens 1 is sunk in the dyeing liquid 21, the sealed space 19 exists as it is inside of the lens holding member 10. Further, since the air in the sealed space 19 is thermally expanded in the same way as described above, the air-tightness of the sealed space 19 is increased. Therefore, only the optical surface 2 of the spectacle lens 1 can be dyed. Further, when the spectacle lens 1 is sunk in the liquid of the dyeing liquid 21 together with the lens holding member 10, the spectacle lens 1 may be held in a posture that the opening part 13 of the lens holding member 10 is directed to a liquid face side (upper side) of the dyeing liquid 21. In this case, the edge surface 4 of the spectacle lens 1 is pressed against the inner peripheral surface 15 of the trunk portion 11 by receiving the floating power by the air in the sealed space 19. Therefore, the adhesion between the inner peripheral surface 15 of the trunk potion 11 and the edge surface 4 of the spectacle lens 1, and the air-tightness of the sealed space 19 can be further increased.

### <3. Second embodiment>

### (3-1. Structure of a lens holder)

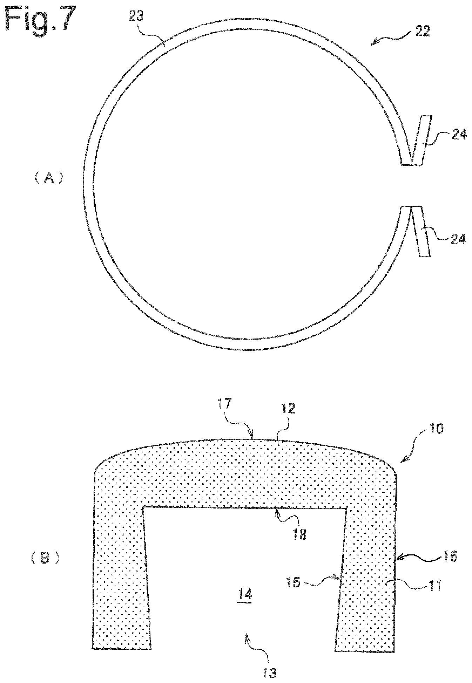

FIG. 7A and FIG. 7B are schematic views showing a structure of a lens holder according to a second embodiment of the present invention.

A fixing member 22 shown in FIG. 7A and the lens holding member 10 shown in FIG. 7B are members constituting the lens holder according to the second embodiment. Regarding the lens holding member 10, explanation is omitted, because the structure is similar to the structure of the first embodiment.

The fixing member 22 is formed into a ring shape as a whole. The fixing member 22 can be made using resin or metal, etc., and particularly metal is preferably used in consideration of durability and stability, etc., of a lens holding state. Further, in this case, aluminium is preferably used from a viewpoint of obtaining a lighter weight. Further, stainless is also preferably used from a viewpoint of having a suitable spring performance.

The fixing member 22 has a long narrow belt part 23 and two operation parts 24 integrally. The belt part 23 is formed into a circular ring shape. The belt part 23 is configured to expand its inner diameter (ring diameter) to be larger than an outer diameter of the lens holding member 10. Further, the inner diameter of the belt part 23 is set to be slightly smaller than the outer diameter of the lens holding member 10 in a state of not adding the abovementioned external force. The operation part 24 is formed at both ends of the belt part 23 respectively.

### (3-2. Mounting of a spectacle lens)

Explanation is given next for a procedure in a case of mounting the spectacle lens 1 on the lens holder having the abovementioned structure.

First, the spectacle lens 1 is mounted on the lens holding member 10 in the same procedure as the first embodiment.

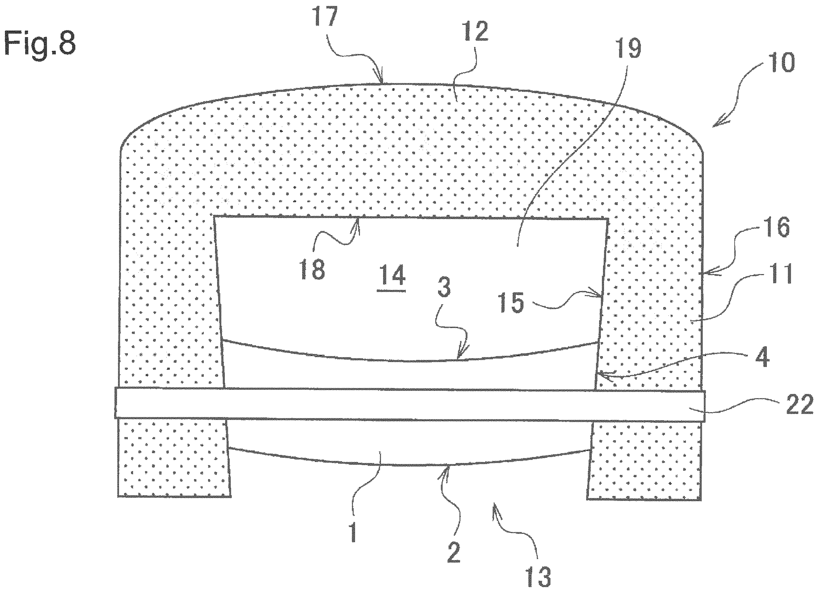

Next, as shown in FIG. 8, the fixing member 22 is engaged with the lens holding member 10. Specifically, the external force is added so as to expand the inner diameter of the belt part 23 to be larger than the outer diameter of the lens holding member 10 by grasping the two operation parts 24 provided in the fixing member 22, using fingers or an instrument, etc., not shown, and in this state, the fixing member 22 is engaged with the lens holding member 10. At this time, the fixing member 22 is positioned at a portion where the spectacle lens 1 is mounted, in a central axis direction of the lens holding member 10, and in this state, the external force is released. Then, simultaneously with the release of the external force, the inner diameter of the belt part 23 is reduced by the spring performance of the fixing member 22 itself, and therefore the trunk portion 11 of the lens holding member 10 is set in a fastened state by the fixing member 22 from outside. Namely, a fastening force of the fixing member 22 engaged with the lens holding member 10, is added on the spectacle lens 1 via the trunk portion 11. Therefore, the spectacle lens 1 is set in a fixed state in the hollow part 14 of the lens holding member 10.

### (3-3. Dyeing treatment step)

Next, explanation is given for a dyeing treatment step of the spectacle lens 1 using the lens holder.

The dyeing treatment step is performed similarly to the first embodiment, excluding a point that the structure of the lens holder is different. Namely, after the spectacle lens 1 is mounted on the lens holder by the abovementioned procedure (FIG. 8), the spectacle lens 1 is dipped in the dyeing liquid 21, and thereafter the spectacle lens 1 is taken out from the dyeing liquid together with the lens holder, in a stage after elapse of a previously determined dyeing time.

### (3-4. Effect)

According to the second embodiment of the present invention, the following effect can be obtained, in addition to the effect similar to the first embodiment.

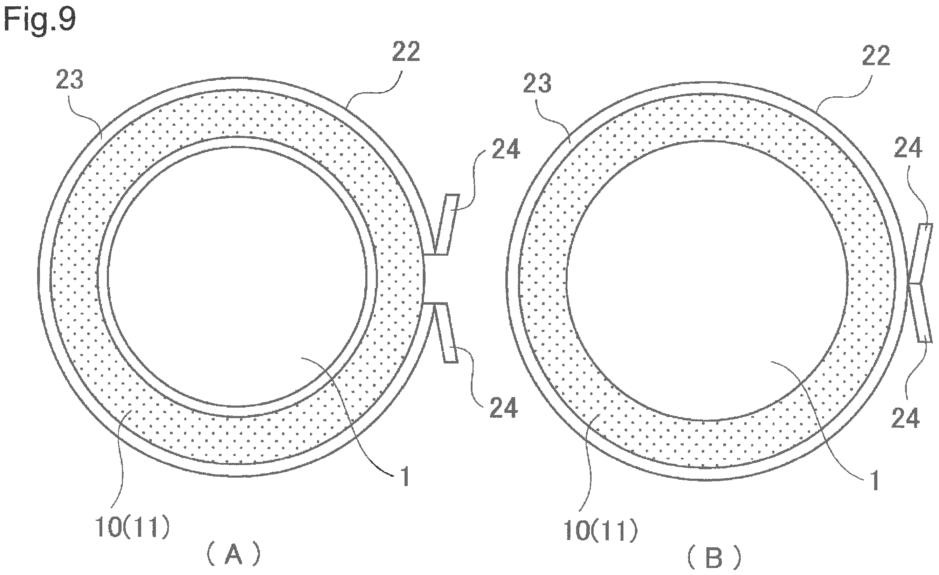

Namely, as shown in FIG. 9(A), and FIG. 9(B), by the engagement of the fixing member 22 and the lens holding member 10, the inner peripheral surface 15 of the lens holding member 10 and the edge surface 4 of the spectacle lens 1 can be adhered to each other using the fastening force of the fixing member 22. Therefore, the dyeing liquid 21 hardly enters into a contact interface between the inner peripheral surface 15 of the lens holding member 10 and the edge surface 4 of the spectacle lens 1, compared with a structure not including the fixing member 22. Accordingly, the dyeing liquid 21 is not allowed to adhere to a portion other than a dyeing object of the spectacle lens 1. Further, by the fastening force of the fixing member 22, the spectacle lens 1 can be surely fixed to the lens holding member 10. Therefore, a drop deterrent force can be increased so that the spectacle lens 1 mounted on the lens holder does not drop from the lens holding member 10.

### <4. Third embodiment>

### (4-1. Structure of the lens holder)

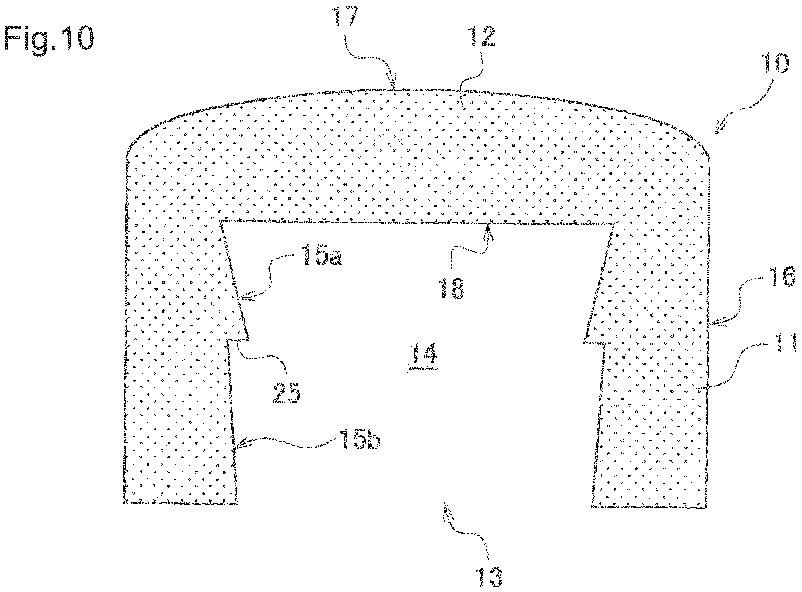

FIG. 10 is a schematic view showing a structure of the lens holder according to a third embodiment of the present invention.

Similarly to the first embodiment, the lens holder shown in the figure is configured using the lens holding member 10 formed into a cup shape as a whole. However, when the third embodiment is compared with the first embodiment, a different point is that a stopper portion 25 is provided in a part of the inner peripheral surface 15 of the lens holding member 10. The stopper portion 25 is formed in a stepped state so as to protrude inward. The stopper portion 25 may be formed continuously over the whole circumference (360°), or may be formed by being divided into a plurality of locations (preferably three locations) at a specific angular pitch. Thus, the inner peripheral surface 15 of the trunk portion 11 is formed by a first inner peripheral surface (taper surface) 15a forming the steps of the stopper portion 25, and a second inner surface (taper surface) 15b closer to the opening part 13 than the first inner peripheral surface.

### (4-2. Mounting of a spectacle lens)

Next, explanation is given for a case that the spectacle lens 1 is mounted on the lens holder having the abovementioned structure. Contents that overlap with the first embodiment are omitted as much as possible.

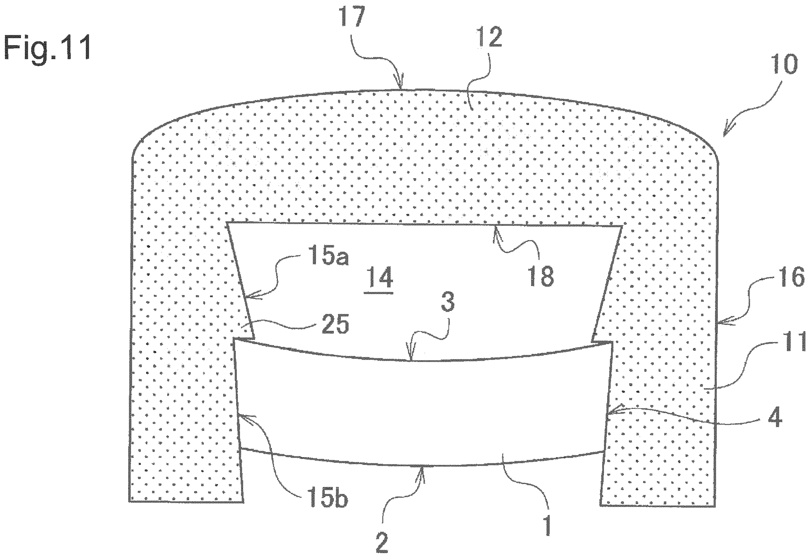

First, after the opening part 13 of the trunk portion 11 is deformed so as to open to outside, the spectacle lens 1 is inserted into the hollow part 14 while maintaining the deformation state. At this time, as shown in FIG. 11, the outer peripheral part of the optical surface 3 of the spectacle lens 1 is abutted on the stopper portion 25.

Next, by releasing the force added on the opening part 13 of the trunk portion 11, the second inner peripheral surface 15b of the trunk portion 11 is adhered to the edge surface 4 of the spectacle lens 1. Thus, a holding position and a holding posture of the spectacle lens 1 are determined in the hollow part 14 of the lens holding member 10. By the procedure described above, the spectacle lens 1 is mounted on the lens holder. A dyeing treatment hereafter is similar to the dyeing treatment of the first embodiment, and therefore explanation therefore is omitted.

### (4-3. Effect)

According to the third embodiment of the present invention, the following effect can be obtained in addition to the effect similar to the effect of the first embodiment.

Namely, since the stopper portion 25 is formed on the inner peripheral surface 15 of the lens holding member 10, the positon and the posture of the spectacle lens 1 can be stable, when the spectacle lens 1 is mounted on the lens holding member 10. Therefore, the inconvenience such that the spectacle lens 1 excessively enters into a deep side of the hollow part 14 of the lens holding member 10, thus providing an insufficient force for holding the spectacle lens 1, can be prevented. Also, the inconvenience that can occur when the spectacle lens 1 is held by the lens holding member 10 in an inclination state, for example, the inconvenience such as a reduction of the adhesion between the inner peripheral surface 15 of the lens holding member 10 and the edge surface 4 of the spectacle lens 1, can be prevented.

Further, when the fixing member 22 described in the second embodiment is combined with the lens holding member 10 of the third embodiment of the present invention, the effect similar to the effect of the second embodiment can be obtained.

### <5. Fourth embodiment>

### (5-1. Structure of a lens holder)

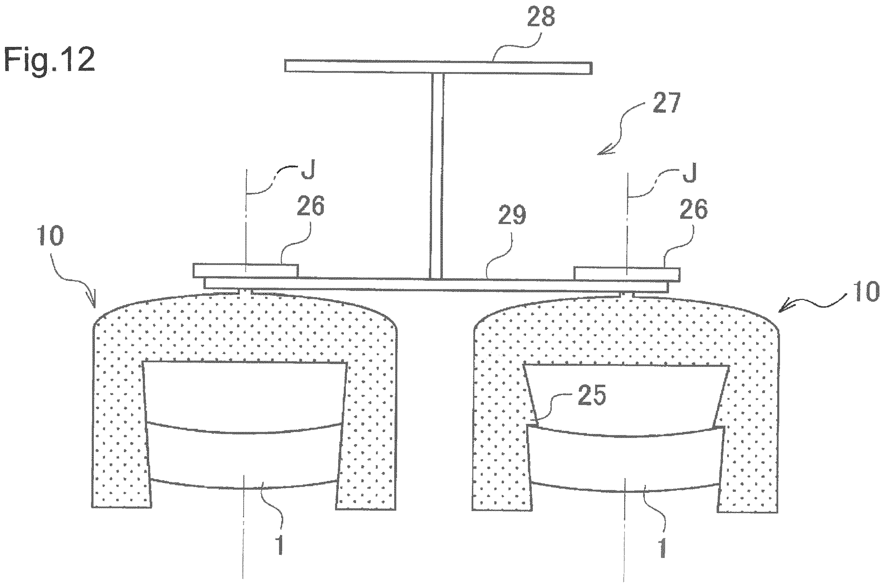

FIG. 12 is a schematic view showing a structure of a lens holder according to a fourth embodiment of the present invention.

The lens holder according to the fourth embodiment of the present invention, employs a structure including a hook portion 26 on a top portion (head portion 12) of the lens holding member 10. The hook portion 26 is formed into a T-shape in side view. Also, the hook portion 26 is formed on a central axis J of the lens holding member 10. The hook portion 26 may be formed integrally with the lens holding member 10, or may be provided in the lens holding member 10 in post-installation. Further, the shape of the hook portion 26 may be other shape (for example a ring shape).

Further, the lens holder includes an auxiliary instrument 27 for assisting a work of the dyeing treatment, as an instrument attached to the lens holder. The auxiliary instrument 27 is used mainly in a case that the lens holding member 10 with the spectacle lens 1 mounted thereon, is dipped in the dyeing liquid 21, and in a case that the spectacle lens 1 is pulled-up thereafter from the dyeing liquid 21 together with the lens holding member 10. The auxiliary instrument 27 has a handle portion 28 and a support portion 29. The handle portion 28 is formed into a T-shape. The support portion 29 is provided in a lower end portion of the handle portion 28. A groove, etc., (not shown) is formed on both ends of the support portion 29, on which the hook portion 26 of the lens holding member 10 can be locked.

### (5-2. Dyeing treatment step)

Next, explanation is given for the dyeing treatment step of the spectacle lens 1 using the lens holder.

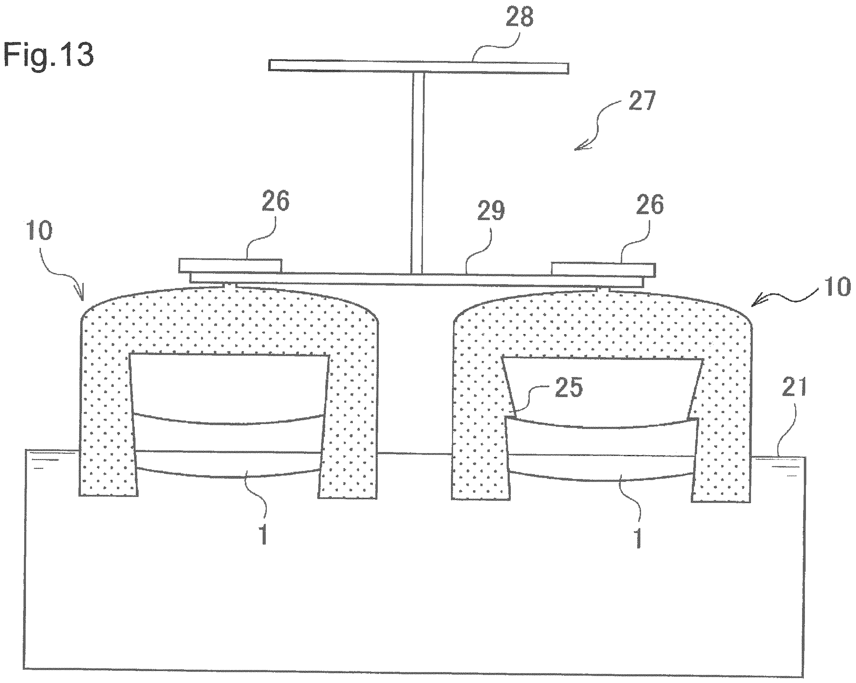

First, the spectacle lens 1 is mounted on the lens holding member 10 by the same procedure as the first embodiment or the third embodiment. Next, the hook portion 26 of each lens holding member 10 is locked on both ends of the support portion 29 of the auxiliary instrument. Next, the lens holding member 10 is lifted together with the auxiliary instrument 27 by grasping the handle portion 28 of the auxiliary instrument 27, and thereafter is transferred to an upper part of a treatment bath not shown. Next, by slowly descending the lens holding member 10 toward the treatment bath while grasping the handle portion 28 of the auxiliary instrument 27, the spectacle lens 1 held by each lens holding member 10 is dipped in the dyeing liquid 21 as shown in FIG. 13. Thus, the spectacle lens 1 is set in a floating state on the liquid face of the dyeing liquid 21 by the floating power of the air. Therefore, there is no problem in releasing the grasp of the handle portion 28 of the auxiliary instrument 27 during dipping. Then, after elapse of the previously determined dyeing time, the handle portion 28 of the auxiliary instrument 27 is grasped in this stage, to thereby slowly pull-up the lens holding member 10 together with the auxiliary instrument 27. Thus, the spectacle lens 1 is taken-out from the dyeing liquid 21.

### (5-3. Effect)

According to a fourth embodiment of the present invention, the following effect can be obtained, in addition to the same effect as the effect of the first embodiment or the second embodiment.

Namely, since the hook portion 26 is provided in the lens holding member 10, the work of the dyeing treatment can be easily performed utilizing the hook portion 26. For example, when the spectacle lens 1 held by the lens holding member 10 is dipped or taken-out in/from the dyeing liquid 21, the lens holding member 10 can be transferred together with the auxiliary instrument 27 by locking the auxiliary instrument 27 on the hook portion 26 of the lens holding member 10. Therefore, the work of dipping the spectacle lens 1 in the dyeing liquid 21, and the work of taking-out the spectacle lens 1 from the dyeing liquid 21, can be easily performed.

Further, according to a structure in which a plurality of lens holding members 10 are hooked on one auxiliary instrument 27, the work of dipping the spectacle lens 1 in the dyeing liquid 21, and the work of taking-out the spectacle lens 1 from the dyeing liquid 21, can be performed at once for a plurality of spectacle lenses 1. Therefore, a series of dyeing work can be efficiently performed.

### <6. Fifth embodiment>

### (6-1. Structure of a lens holder)

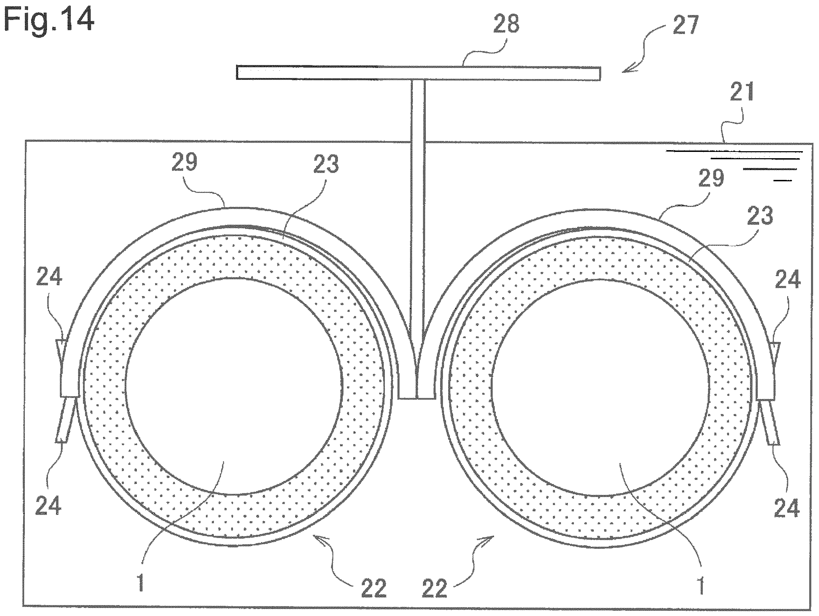

FIG. 14 is a schematic view showing a structure of a lens holder according to a fifth embodiment of the present invention.

In the lens holder according to the fifth embodiment of the present invention, a system of supporting the lens holding member 10 using the auxiliary instrument 27, is different compared with the fourth embodiment. Namely, in the fourth embodiment, a system of supporting the lens holding member 10 by the auxiliary instrument 27 is employed, so that the spectacle lens 1 held by the lens holding member 10 is disposed horizontally (so that optical surfaces 2 and 3 are directed in a vertical direction). Meanwhile, in the fifth embodiment, a system of supporting the lens holding member 10 by the auxiliary instrument 27 is employed, so that the spectacle lens 1 held by the lens holding member 10 is disposed vertically (so that optical surfaces 2 and 3 are directed in a horizontal direction). Specifically, a structure in which the support portion 29 is provided on a lower end of the handle portion 28 of the auxiliary instrument 27, and the support portion 29 is curved into an arc shape, is employed. Also, a structure in which the fixing member 22 is engaged with the outer peripheral part of the lens holding member 10, and the support portion 29 of the auxiliary instrument 27 is locked on the fixing member 22, is employed. As a locking structure, for example, a structure in which a claw not shown is provided on an end part of the support portion 29, and the claw is hooked and fixed on the operation part 24 of the fixing member 22, can be employed. In this case, there is no necessity for providing the hook portion 26 (see FIG. 12) on the lens holding member 10.

### (6-2. Dyeing treatment step)

Next, explanation is given for the dyeing treatment step of the spectacle lens 1 using the lens holder.

First, the fixing member 22 is engaged with the outside of the lens holding member 10 after the spectacle lens 1 is mounted on the lens holding member 10 by the same procedure as the procedure of the second embodiment. Next, the end part of the support portion 29 is locked on the fixing member 22 so that the support portion 29 of the auxiliary instrument 27 is disposed along the outer periphery of the lens holding member 10.

Next, the lens holding member 10 is lifted together with the auxiliary instrument 27 by grasping the handle portion 28 of the auxiliary instrument 27, and thereafter is transferred to an upper part of a treatment bath not shown. Next, by slowly descending the lens holding member 10 toward the treatment bath while grasping the handle portion 28 of the auxiliary instrument 27, the spectacle lens 1 held by each lens holding member 10 is dipped in the dyeing liquid 21 as shown in FIG. 14. At this time, the spectacle lens 1 is dipped in the dyeing liquid 21 together with the lens holding member 10. Thereafter, the auxiliary instrument 27 is pressed from above so that the lens holding member 10 is not floated by the floating power, on the liquid face of the dyeing liquid 21, and in this state, elapse of the previously determined dyeing time is weighted. Then, after elapse of the previously determined dyeing time, the handle portion 28 of the auxiliary instrument 27 is grasped in this stage, to thereby slowly pull-up the lens holding member 10 together with the auxiliary instrument 27. Thus, the spectacle lens 1 is taken-out from the dyeing liquid 21.

### (6-3. Effect)

According to the fifth embodiment of the present invention, the following effect can be obtained, in addition to the same effect as the effect of the fourth embodiment.

Namely, even when the spectacle lens 1 is mounted on the lens holding member 10 in any direction to dip the spectacle lens 1 vertically in the liquid of the dyeing liquid 21, the bubble trap does not occur in the optical surfaces 2 and 3 of the spectacle lens 1. Therefore, generation of uneven dyeing due to bubble trap can be prevented. Further, by vertically holding the spectacle lens 1, gradient dyeing can be applied to one of the optical surfaces. The gradient dyeing means a dyeing method of dyeing only an upper half of the spectacle lens 1, and not dyeing a lower half, or giving a variation in concentration of the dyeing.

### <7. Modified example, etc.>

A technical range of the present invention is not limited to the abovementioned embodiments, and includes various modifications and improvements in accordance with the appended claims.

For example, in the abovementioned embodiment, explanation is given for an example of the dyeing treatment applied to the spectacle lens 1 as a surface treatment step included in the manufacturing step of the spectacle lens 1. However, the present invention is not limited thereto, and can be widely applied to the surface treatment of forming a desired layer in a state that the spectacle lens 1 is dipped in the treatment liquid. Specifically, for example, the present invention can be applied to the treatment of forming an antifouling layer or an anti-fog layer on the optical surfaces 2 and 3 of the spectacle lens 1, or the treatment of forming a hard coat layer (hard coat treatment), or water-repellent coating, etc. In addition, the present invention can also be applied to the treatment of forming a functional film (dimming film or polarizing film, etc.) in the spectacle lens 1. When the present invention is applied to the dyeing treatment, two optical surfaces 2 and 3 of the spectacle lens 1 can be dyed by different colors respectively, only one optical surface 2 (or optical surface 3) can be dyed, or a dyeing area can be changed respectively in the optical surface 2 and the optical surface 3. Further, as a surface treatment other than the dyeing treatment, for example, as a hard coat treatment applied to the spectacle lens 1, when the hard coat layer is formed on the optical surfaces 2 and 3 of the spectacle lens 1 respectively, the hard coat layer can be formed using hard coat liquids of different composition, etc., on the optical surface 2 and the optical surface 3 respectively. Further, the present invention is not limited to the embodiment of holding the spectacle lens 1 by the lens holding member 10, but can be widely applied to the manufacturing method of the spectacle lens 1 using a dipping method of applying one surface treatment to the spectacle lens 1 in a state of dipping one surface of the optical surfaces 2 and 3 of the spectacle lens 1 in the treatment liquid and in a state of not dipping the other surface in the treatment liquid. Further, the lens holder of the present invention is not limited to the surface treatment applied to the optical lens, and for example, can be used for cleaning treatment or heat treatment applied to the optical lens, or may be used for transport, storage, inspection, and test of the optical lens.

Further, regarding the abovementioned fourth embodiment, the number of the lens holding member 10 that can be supported by the auxiliary instrument 27 may be one, or three or more. Further, the auxiliary instrument 27 may be detached from the lens holding member 10 once in a stage when the spectacle lens 1 is dipped in the dyeing liquid 21, and after elapse of the dyeing time, the auxiliary instrument 27 may be pulled-up again by locking it on the hook portion 26 of the lens holding member 10.

Further, in FIG. 12 and FIG. 13, the lens holding member 10 having no stopper portion 25 and the lens holding member 10 having the stopper portion 25, are locked on the support portion 29 of the auxiliary instrument 27, for the convenience of the explanation. However, the present invention is not limited thereto, and only the lens holding member 10 having no stopper portion 25 or only the lens holding member 10 having the stopper portion 25 may be locked on the support portion 29 of the auxiliary instrument 27. Further, the hook portion 26 may be formed on the lens holding member 10 with which the fixing member 22 is engaged, and the support portion 29 may be locked on the auxiliary instrument 27, irrespective of presence/absence of the stopper portion 25.

Further, regarding the abovementioned fifth embodiment, in order to prevent the generation of uneven dyeing due to the bubble trap, the spectacle lens 1 may be held in an inclination state to a horizontal surface, other than holding the spectacle lens 1 vertically.

Further, in the abovementioned each embodiment, the plastic spectacle lens is assumed to be an object to which the surface treatment is applied. However, the present invention is not limited thereto, and a glass spectacle lens may be an object to which the surface treatment is applied.

Further, in the abovementioned each embodiment, the entire lens holding member 10 is made of an elastic material having rubber elasticity. However, the present invention is not limited thereto, and at least a portion on which the spectacle lens 1 is mounted (for example, an entire part or a part of the trunk portion 11) may be made of the elastic material.

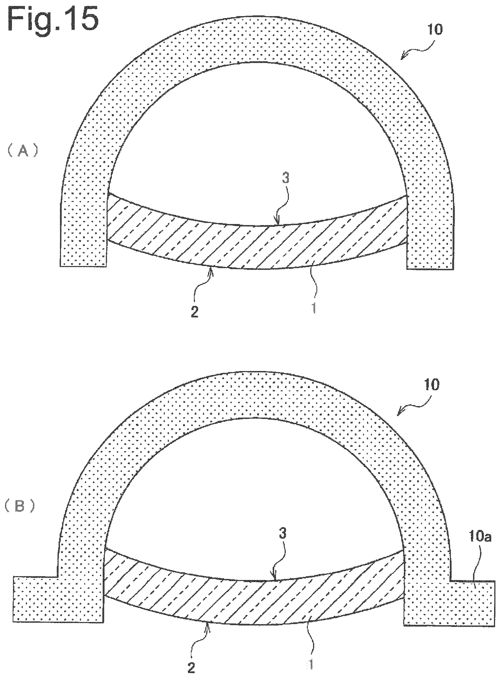

In an example not in accordance with the invention, the lens holding member 10 may be formed into a sectional hemisphere-like shape as shown in FIG. 15A, or may be formed into a sectional hat type by providing a brim portion 10a on the lens holding member 10. According to such a hat-type lens holding member 10, the opening part 13 can be expanded by using the brim portion 10a of the lens holding member 10 when the spectacle lens 1 is mounted on the lens holding member 10. Therefore, a work of mounting the spectacle lens 1 can be easy. Also, when the spectacle lens 1 is dipped in the dyeing liquid 21, the lens holding member 10 is hardly inverted by existence of the brim portion 10a. Therefore, an inversion suppressing effect can be more increased than a case when there is no brim portion 10a.

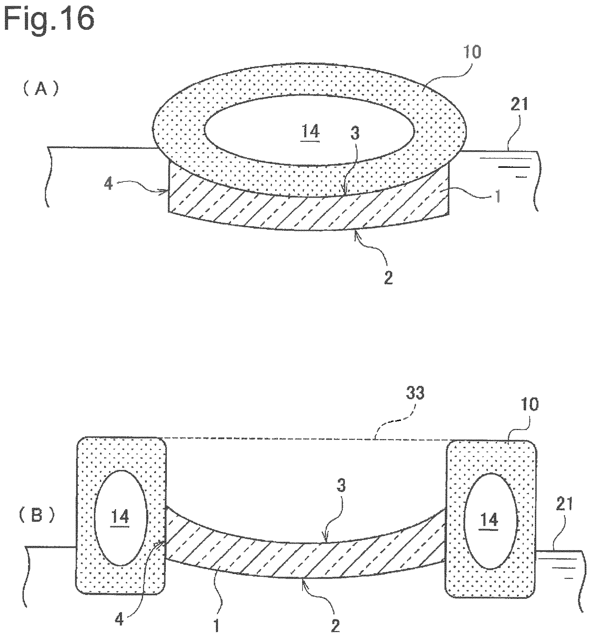

In a further example not in accordance with the invention, the lens holding member may be a structure provided with a hollow part 14 in which the lens holding member 10 itself has a floating power. Specifically, for example, as shown in FIG. 16A and FIG. 16B, the hollow part 14 may be formed in a sealed state inside of the lens holding member 10, and the spectacle lens 1 may be floated on the liquid face of the dyeing liquid 21 while suppressing the inversion of the lens holding member 10 by the air bladder effect (floating power) in the hollow part 14. In the lens holding member 10 shown in FIG. 16A, only the optical surface 2 of the spectacle lens 1 can be dyed by holding the optical surface 3 of the spectacle lens 1 by making it adsorbed on a lower surface side of the lens holding member 10 by surface tension, etc. Also, in the lens holding member 10 shown in FIG. 16B, only the optical surface 2 of the spectacle lens 1 can be dyed by holding the spectacle lens 1 in a form of making the edge surface 4 of the spectacle lens 1 adhered to the inner peripheral surface of the lens holding member 10 which is formed into a ring shape (donut shape) as a whole. Further, it is possible to effectively prevent a droplet of the dyeing liquid 21 from adhering to the optical surface 3 during dipping, by supplementarily providing a cover 33 on the lens holding member 10 as needed.

### Description of Signs and Numerals

- 1: Spectacle lens
- 10: Lens holding member
- 11: Trunk portion
- 12: Head portion
- 13: Opening part
- 14: Hollow part
- 19: Sealed space
- 21: Dyeing liquid
- 22: Fixing member
- 27: Auxiliary instrument

## Claims

1. A method for manufacturing a spectacle lens (1) having a surface treatment step of applying surface treatment to a spectacle lens (1) in a state that the lens (1) is dipped in a treatment liquid (21),
wherein the surface treatment step comprises
step (A) of holding the spectacle lens (1) having a first optical surface (2) and a second optical surface (3) by a lens holder capable of holding the spectacle lens (1) such that the first optical surface (2) is dipped in the treatment liquid (21) and the second optical surface (3) is not dipped in the treatment liquid (21), and
step (B) of dipping the first optical surface (2) of the spectacle lens (1) held by the lens holder in the treatment liquid (21) and applying the surface treatment to the first optical surface (2), whereby
the lens holder comprises a lens holding member (10), and
the lens holding member (10) comprises
a trunk portion (11) formed into a cylindrical shape to have a hollow part (14),
a head portion (12) closing one end of the trunk portion (11), and
an opening part (13) set at the other end of the trunk portion (11) for inserting the spectacle lens (1) into the trunk portion (11), and
the lens holding member (10) is formed using an elastic material, and
an inner peripheral surface (15) of the trunk portion (11) is formed so that an inner diameter becomes gradually smaller toward the opening part (13) from the head portion (12), and
an opening diameter (D1) of the opening part (13) is set to be smaller than the outer diameter (D0) of a spectacle lens (1), whereby
the step (A) comprises
step (A1) of deforming the opening part (13) to be expanded by adding a tensile force to outside to the opening part (13),
step (A2) of inserting the spectacle lens (1) into the trunk portion (11) through the opening part (13) such that the second optical surface (3) faces the hollow portion (14) while maintaining the deformed state of the opening part (13), and
step (A3) of holding the spectacle lens (1) by the trunk portion (11) by the contact pressure between the inner peripheral surface (15) of the trunk portion (11) and the edge surface (4) of the spectacle lens (1) by canceling the tensile force added to the opening part (13), and forming an sealed space (19) to which the second optical surface (3) faces in the hollow portion (14) using the spectacle lens (1) as a lid.

2. The method for manufacturing a spectacle lens (1) according to claim 1, comprising:
maintaining a temperature of the treatment liquid to be higher than 20°C ± 15°C; and
increasing an adhesion of a contact portion between the lens holding member (10) and the spectacle lens (1) by utilizing a thermal expansion of air in the sealed space (19), when the spectacle lens (1) held by the lens holding member (10) is dipped in the treatment liquid.

3. The method for manufacturing a spectacle lens (1) according to claim 1 or 2, wherein the spectacle lens (1) is set in a floating state on a liquid face of the treatment liquid (21) by utilizing a floating power of the air in the sealed space (19).

4. The method for manufacturing a spectacle lens (1) according to claim 1 or 2, wherein the spectacle lens (1) is dipped in the treatment liquid (21) together with the lens holding member (10) while holding the second optical surface (2) of the spectacle lens (1) in a state of facing the sealed space (19).

5. The method for manufacturing a spectacle lens (1) according to claim 4, wherein the spectacle lens (1) is set in a vertical state or in a state of being inclined to a horizontal surface, in the liquid of the treatment liquid (21).

6. The method for manufacturing a spectacle lens (1) according to any one of claims 1 to 5, wherein the surface treatment is a dyeing treatment, hard coat treatment, or water-repellent treatment applied to a spectacle lens (1), or a treatment of forming a functional film on a spectacle lens (1).

7. A lens holder used in a surface treatment step of applying surface treatment to a spectacle lens (1), comprising
a lens holding member (10),
wherein the lens holding member (10) comprises
a trunk portion (11) formed into a cylindrical shape to have a hollow part (14),
a head portion (12) closing one end of the trunk portion (11), and
an opening part (13) set at the other end of the trunk portion (11) for inserting a spectacle lens (1) into the trunk portion (11), whereby
the lens holding member (10) is formed using an elastic material, and
an inner peripheral surface (15) of the trunk portion (11) is formed so that an inner diameter becomes gradually smaller toward the opening part (13) from the head portion (12), and
an opening diameter (D1) of the opening part (13) is set to be smaller than the outer diameter (D0) of a spectacle lens (1).

8. The lens holder according to claim 7, wherein a thickness dimension of the trunk portion (11) is set so as to be gradually larger toward the opening part (13).

9. The lens holder according to any one of claims 7 or 8, wherein a stopper portion (25) is formed on a part of the inner peripheral surface (15) of the lens holding member (10) so as to be abutted on an outer peripheral part (4) of a spectacle lens (1).

10. The lens holder according to any one of claims 7 to 9, wherein the lens holding member (10) has a hook portion (26) capable of locking an auxiliary instrument (27) for assisting a work of the surface treatment.

## Patentansprüche

1. Verfahren zur Herstellung eines Brillenglases (1) mit einem Oberflächenbehandlungsschritt des Anwendens einer Oberflächenbehandlung auf ein Brillenglas (1) in einem Zustand, in dem das Glas (1) in eine Behandlungsflüssigkeit (21) getaucht wird,
wobei der Oberflächenbehandlungsschritt umfasst:
einen Schritt (A) des Haltens des Brillenglases (1) mit einer ersten optischen Oberfläche (2) und einer zweiten optischen Oberfläche (3) mittels eines Glashalters, der dazu ausgelegt ist, das Brillenglas (1) derart zu halten, dass die erste optische Oberfläche (2) in die Behandlungsflüssigkeit (21) getaucht wird, und die zweite optische Oberfläche (3) nicht in die Behandlungsflüssigkeit (21) getaucht wird, und
einen Schritt (B) des Tauchens der ersten optischen Oberfläche (2) des Brillenglases (1), das durch den Glashalter gehalten wird, in die Behandlungsflüssigkeit (21) und des Anwendens der Oberflächenbehandlung auf die erste optische Oberfläche (2), wobei der Glashalter ein Glashalteelement (10) umfasst, und
das Glashaltelement (10) umfasst:
einen Stammbereich (11), der in einer zylindrischen Gestalt gebildet ist, um einen Hohlbereich (14) zu haben,
einen Kopfbereich (12), der ein Ende des Stammbereichs (11) abschließt, und
einen offenen Teil (13), der an dem anderen Ende des Stammbereichs (11) eingestellt ist, um das Brillenglas (1) in den Stammbereich (11) einzusetzen, und
wobei das Glashalteelement (10) unter Verwendung eines elastischen Materials gebildet ist, und
wobei eine innere Umfangsoberfläche (15) des Stammbereichs (11) derart gebildet ist, dass ein Innendurchmesser von dem Kopfbereich (12) aus in Richtung des offenen Teils (13) schrittweise kleiner wird, und
wobei ein Öffnungsdurchmesser (D1) des offenen Teils (13) derart eingestellt ist, dass er kleiner ist als der Außendurchmesser (D0) eines Brillenglases (1), wobei
der Schritt (A) umfasst:
einen Schritt (A1) des Verformens des offenen Teils (13) derart, dass er aufgeweitet wird, indem eine Zugkraft auf die Außenseite des offenen Teils (13) hinzugefügt wird,
einen Schritt (A2) des Einsetzens des Brillenglases (1) in den Stammbereich (11) durch den offenen Teil (13) derart, dass die zweite optische Oberfläche (3) dem Hohlbereich (14) gegenüberliegt, während der verformte Zustand des offenen Teils (13) beibehalten wird, und
einen Schritt (A3) des Haltens des Brillenglases (1) mittels des Stammbereichs (11) durch den Kontaktdruck zwischen der inneren Umfangsoberfläche (15) des Stammbereichs (11) und der Randoberfläche (4) des Brillenglases (1) unter Aufhebung der Zugkraft, die auf den offenen Teil (13) hinzugefügt wird, und Bilden eines abgedichteten Raums (19), dem die zweite optische Oberfläche (3) in dem Hohlbereich (14) gegenüberliegt unter Verwendung des Brillenglases (1) als ein Deckel.

2. Verfahren zur Herstellung eines Brillenglases (1) nach Anspruch 1, umfassend:
Beibehalten einer Temperatur der Behandlungsflüssigkeit höher als 20°C ± 15°C; und
Erhöhen einer Adhäsion eines Kontaktbereichs zwischen dem Glashalteelement (10) und dem Brillenglas (1) unter Verwendung einer thermischen Expansion von Luft in dem abgedichteten Raum (19), wenn das Brillenglas (1). das durch das Glashalteelement (10) gehalten wird, in die Behandlungsflüssigkeit getaucht wird.

3. Verfahren zur Herstellung eines Brillenglases (1) nach Anspruch 1 oder 2, wobei das Brillenglas (1) in einem treibenden Zustand auf eine flüssige Fläche der Behandlungsflüssigkeit (21) gesetzt wird unter Verwendung einer Auftriebswirkung der Luft in dem abgedichteten Raum (19).

4. Verfahren zur Herstellung eines Brillenglases (1) nach Anspruch 1 oder 2, wobei das Brillenglas (1) in die Behandlungsflüssigkeit (21) zusammen mit dem Glashalteelement (10) getaucht wird, während die zweite optische Oberfläche (2) des Brillenglases (1) in einem Zustand gehalten wird, in dem sie dem abgedichteten Raum (19) gegenüberliegt.

5. Verfahren zur Herstellung eines Brillenglases (1) nach Anspruch 4, wobei das Brillenglas (1) in einem vertikalen Zustand oder in einem Zustand mit einer Neigung gegenüber einer horizontalen Oberfläche in der Flüssigkeit der Behandlungsflüssigkeit (21) eingestellt wird.

6. Verfahren zur Herstellung eines Brillenglases (1) nach einem der Ansprüche 1 bis 5, wobei die Oberflächenbehandlung eine Färbebehandlung, eine Hartbeschichtungsbehandlung oder eine Wasserabweisungsbehandlung ist, die auf ein Brillenglas (1) angewandt wird, oder eine Behandlung zum Bilden eines funktionalen Films auf einem Brillenglas (1).

7. Glashalter, der in einem Oberflächenbehandlungsschritt des Anwendens einer Oberflächenbehandlung auf ein Brillenglas (1) verwendet wird, umfassend:
ein Glashalteelement (10),
wobei das Glashalteelement (10) umfasst:
einen Stammbereich (11) der in einer zylindrischen Gestalt gebildet ist, um einen Hohlbereich (14) zu haben,
einen Kopfbereich (12), der ein Ende des Stammbereichs (11) abschließt, und
einen offenen Teil (13), der an dem anderen Ende des Stammbereichs (11) eingestellt ist, zum Einsetzen eines Brillenglases (1) in den Stammbereich (11), wobei
das Glashalteelement (10) unter Verwendung eines elastischen Materials gebildet ist, und
eine innere Umfangsoberfläche (15) des Stammbereichs (11) derart gebildet ist, dass ein Innendurchmesser von dem Kopfbereich (12) aus in Richtung des offenen Teils (13) schrittweise kleiner wird, und
ein Öffnungsdurchmesser (D1) des offenen Teils (13) derart eingestellt ist, dass er kleiner ist als der Außendurchmesser (D0) eines Brillenglases (1).

8. Glashalter nach Anspruch 7, wobei eine Dickenabmessung des Stammbereichs (11) derart eingestellt ist, dass sie in Richtung des offenen Teils (13) schrittweise größer wird.

9. Glashalter nach einem der Ansprüche 7 oder 8, wobei ein Stopperbereich (25) an einem Teil der inneren Umfangsoberfläche (15) des Glashalteelements (10) derart gebildet ist, dass er an einem äußeren Umfangsteil (4) eines Brillenglases (1) anschlägt.

10. Glashalter nach einem der Ansprüche 7 bis 9, wobei das Glashaltelement (10) einen Hakenbereich (26) hat, der dazu ausgelegt ist, ein Hilfsinstrument (27) zum Unterstützen einer Arbeit der Oberflächenbehandlung zu verriegeln.

## Revendications

1. Procédé de fabrication d'un verre de lunettes (1) ayant une étape de traitement de surface consistant à appliquer un traitement de surface à un verre de lunettes (1) dans un état où le verre (1) est trempé dans un liquide de traitement (21),
dans lequel l'étape de traitement de surface comprend
l'étape (A) consistant à maintenir le verre de lunettes (1) ayant une première surface optique (2) et une seconde surface optique (3) par un support de verre capable de maintenir le verre de lunettes (1) de sorte que la première surface optique (2) soit trempée dans le liquide de traitement (21) et que la seconde surface optique (3) ne soit pas trempée dans le liquide de traitement (21), et
l'étape (B) consistant à tremper la première surface optique (2) du verre de lunettes (1) retenu par le support de verre dans le liquide de traitement (21) et à appliquer le traitement de surface sur la première surface optique (2), moyennant quoi
le support de verre comprend un élément de maintien de verre (10), et
l'élément de maintien de verre (10) comprend
une portion de tronc (11) formée en forme de cylindre pour avoir une partie creuse (14),
une portion de tête (12) fermant une extrémité de la portion de tronc (11), et
une partie d'ouverture (13) placée sur l'autre extrémité de la portion de tronc (11) pour insérer le verre de lunettes (1) dans la portion de tronc (11), et
l'élément de maintien de verre (10) est formé en utilisant un matériau élastique, et
une surface périphérique intérieure (15) de la portion de tronc (11) est formée de sorte qu'un diamètre intérieur devienne progressivement plus petit vers la partie d'ouverture (13) à partir de la portion de tête (12), et
un diamètre d'ouverture (D1) de la partie d'ouverture (13) est réglé pour être plus petit que le diamètre extérieur (D0) d'un verre de lunettes (1), moyennant quoi
l'étape (A) comprend
l'étape (A1) consistant à déformer la partie d'ouverture (13) devant être élargie en ajoutant une force de traction vers l'extérieur à la partie d'ouverture (13),
l'étape (A2) consistant à insérer le verre de lunettes (1) dans la portion de tronc (11) à travers la partie d'ouverture (13), de sorte que la seconde surface optique (3) soit tournée vers la portion creuse (14) tout en gardant l'état déformé de la partie d'ouverture (13), et
l'étape (A3) consistant à maintenir le verre de lunettes (1) par la portion de tronc (11) par la pression de contact entre la surface périphérique intérieure (15) de la portion de tronc (11) et la surface de bord (4) du verre de lunettes (1) en annulant la force de traction ajoutée à la partie d'ouverture (13), et à former un espace étanche (19) auquel la seconde surface optique (3) fait face dans la portion creuse (14) en utilisant le verre de lunettes (1) comme couvercle.

2. Procédé de fabrication d'un verre de lunettes (1) selon la revendication 1, comprenant les étapes consistant à :
maintenir une température du liquide de traitement supérieure à 20°C ± 15°C ; et
augmenter une adhérence d'une portion de contact entre l'élément de maintien de verre (10) et le verre de lunettes (1) en utilisant une dilatation thermique de l'air dans l'espace étanche (19), lorsque le verre de lunettes (1) retenu par l'élément de maintien de verre (10) est trempé dans le liquide de traitement.

3. Procédé de fabrication d'un verre de lunettes (1) selon la revendication 1 ou 2, dans lequel le verre de lunettes (1) est placé dans un état flottant sur une face liquide du liquide de traitement (21) en utilisant un pouvoir de flottaison de l'air dans l'espace étanche (19).

4. Procédé de fabrication d'un verre de lunettes (1) selon la revendication 1 ou 2, dans lequel le verre de lunettes (1) est trempé dans le liquide de traitement (21) conjointement avec l'élément de maintien de verre (10) tout en retenant la seconde surface optique (2) du verre de lunettes (1) dans un état faisant face à l'espace étanche (19).

5. Procédé de fabrication d'un verre de lunettes (1) selon la revendication 4, dans lequel le verre de lunettes (1) est placé dans un état vertical ou dans un état d'inclinaison par rapport à une surface horizontale, dans le liquide du liquide de traitement (21).

6. Procédé de fabrication d'un verre de lunettes (1) selon l'une quelconque des revendications 1 à 5, dans lequel le traitement de surface est un traitement de coloration, un traitement de revêtement dur, ou un traitement hydrofuge appliqué à un verre de lunettes (1), ou un traitement consistant à former un film fonctionnel, sur un verre de lunettes (1).

7. Support de verre utilisé dans une étape de traitement de surface consistant à appliquer un traitement de surface à un verre de lunettes (1), comprenant
un élément de maintien de verre (10),
dans lequel l'élément de maintien de verre (10) comprend
une portion de tronc (11) formée en forme de cylindre pour avoir une partie creuse (14),
une portion de tête (12) fermant une extrémité de la portion de tronc (11), et
une partie d'ouverture (13) placée sur l'autre extrémité de la portion de tronc (11) pour insérer un verre de lunettes (1) dans la portion de tronc (11) ; moyennant quoi
l'élément de maintien de verre (10) est formé en utilisant un matériau élastique, et
une surface périphérique intérieure (15) de la portion de tronc (11) est formée de sorte qu'un diamètre intérieur devienne progressivement plus petit vers la partie d'ouverture (13) à partir de la portion de tête (12), et
un diamètre d'ouverture (D1) de la partie d'ouverture (13) est réglé pour être plus petit que le diamètre extérieur (D0) d'un verre de lunettes (1).

8. Support de verre selon la revendication 7, dans lequel une dimension d'épaisseur de la portion de tronc (11) est réglée de sorte à être progressivement plus grande vers la partie d'ouverture (13).

9. Support de verre selon l'une quelconque des revendications 7 ou 8, dans lequel une portion de butée (25) est formée sur une partie de la surface périphérique intérieure (15) de l'élément de maintien de verre (10) de sorte à venir en butée sur une partie périphérique extérieure (4) d'un verre de lunettes (1).

10. Support de verre selon l'une quelconque des revendications 7 à 9, dans lequel
l'élément de maintien de verre (10) a une portion de crochet (26) capable de verrouiller un instrument auxiliaire (27) pour assister un travail du traitement de surface.
